# EUROPÄISCHE PATENTSCHRIFT

(11) **EP 0 823 561 B1**
(45) Veröffentlichungstag und Bekanntmachung des Hinweises auf die Patenterteilung: **20.10.1999**
(21) Anmeldenummer: 97110851.9
(22) Anmeldetag: 01.07.1997
(51) Int. Cl.: F16B 11/00, F16B 47/00, C09J 5/00

(54) **Grundplatte aus Kunststoff**
Plastic base plate
Plaque de base en matière plastique

(30) Priorität: 06.08.1996 DE 19631754
(43) Veröffentlichungstag der Anmeldung: 11.02.1998
(73) Patentinhaber: TRW Automotive Electronics & Components GmbH & Co. KG, 78315 Radolfzell (DE)
(72) Erfinder: Kraus, Willibald, 67269 Grünstadt (DE)
(74) Vertreter: Eder, Eugen, Dipl.-Ing.

(56) Entgegenhaltungen:
- WO-A-95/09548
- DE-A- 4 014 270
- DE-A- 4 101 995
- DE-A- 4 416 884
- US-A- 4 566 924

## Beschreibung

Die Erfindung bezieht sich auf eine Grundplatte aus Kunststoff, mit einem im wesentlichen plattenförmigen Befestigungsteil, der eine mit einem Klebemittel zu versehene an einem Träger zu befestigende Bodenfläche aufweist, nach dem Oberbegriff des Anspruchs. 1.

Als Stand der Technik sind bereits eine Anzahl von Grundplatten bekannt (DE 34 18 894 A1, DE 35 44 217, DE-OS 29 30 850, DE-OS 28 07 331). Allen diesen bekannten Ausführungsformen ist gemeinsam, daß die Bodenfläche von vornherein mit dem Klebemittel beschichtet ist, welches unter dem Einfluß von beispielsweise Druck, Wärme oder Lichtstrahlung zu einem Verklebevorgang mit einem Träger, beispielsweise einer Kraftfahrzeugkarosserie führt.

Als Stand der Technik, ist weiterhin eine Grundplatte aus Kunststoff bekannt (DE 39 03 124 C2), bei welcher die Bodenfläche wiederum mit dem Klebemittel versehen ist. Diese Bodenfläche ist konkav gewölbt ausgebildet, wobei der tiefste Punkt der Wölbung in dem den Kupplungselementen gegenüberliegenden Bereich liegt. Hierdurch ergibt sich, daß auf einfache Weise auch bei unebenen Flächen eines Trägers eine gute Haltewirkung über die mit Klebemittel versehene Fläche der Grundplatte erzielt wird.

Als weiterer Stand der Technik, von dem die vorliegende Erfindung ausgeht, ist eine Konstruktion bekannt, bei welcher die Grundplatte insbesondere als Sensor mit einer kreisförmigen Klebefläche ausgebildet ist. In der Klebefläche ist eine kugelkalottenförmige Vertiefung vorgesehen, in die ein kugelförmiger Hohlkörper aus beispielsweise Glas eingesetzt ist, welcher flüssigen Klebstoff enthält. Oberhalb dieser Vertiefung kann in dem Sensor ein Dorn vorgesehen sein, welcher bei Druck auf den Sensor gegen den Hohlkörper gelangt und ihn aufritzt. Diese bekannte Konstruktion ist bauaufwendig gestaltet und bedarf eines besonderen Montagewerkzeuges, um die Verbindung mit einem Träger herbeizuführen.

Weiterer Stand der Technik ist ein mit einem Träger zu verbindendes Kunststoffelement (WO95/09548), bei welchem wiederum eine mit einem Klebstoff gefüllte Kapsel vorgesehen ist, nach deren Aufplatzen der Klebstoff eine Verbindung zwischen dem Kunststoffelement und einem Träger herstellt.

Aufgabe der vorliegenden Erfindung ist es demgegenüber, eine Grundplatte der eingangs genannten Art zu schaffen, welche bei einfachem Aufbau eine schnelle und effektive Montage mit einem Träger gewährleistet.

Diese Aufgabe wird erfindungsgemäß mit den Merkmalen im kennzeichnenden Teil des Anspruchs 1 gelöst.

Hierdurch ergibt sich der Vorteil, daß zunächst die Bodenfläche frei von Klebemitteln ist. Erst wenn das in dem Raum befindliche Klebemittel durch Eintauchen der Spreizniet in den Raum unter Licht- und/oder Wärmeeinfluß aktiviert wird, gelangt dieses auf die Bodenfläche und bewirkt einen Klebevorgang an einem Träger.

Der mit Klebemittel gefüllte Raum ist durch den mit dem Befestigungsteil verbundenen Hohlkörper definiert, welcher durch den Spreizniet verschließbar ist. Zwischen der Stirnseite der Spreizniet und dem Innenumfang des Hohlkörpers befindet sich ein Filmscharnier, welches bei Einpressen der Spreizniet in den Raum des Hohlkörpers reißt.

Der Spreizniet und der Hohlkörper können jeweils zylindrisch ausgebildet sein.

In weiterer Ausgestaltung der Erfindung kann ein Freiraum unterhalb des das Klebemittel aufnehmenden Raums des Hohlkörpers mit die Bodenfläche durchsetzenden Nuten verbunden sein.

Es ist nicht unbedingt erforderlich, daß der gesamte Bereich der Bodenfläche mit Klebstoff versehen wird. Alternativ besteht auch die Möglichkeit, daß die Bodenfläche mit mindestens einer Nut, vorzugsweise einer Kreuznut zur zumindest teilweisen Aufnahme des erwärmten Klebemittels nach Durchtrennen der Folie aufweist. Es besteht auch die Möglichkeit, daß die Bodenfläche konkav gewölbt ausgebildet ist, wobei diese konkave Wölbung auch mit Nuten versehen sein kann.

Als Klebemittel kann beispielsweise ein Epoxydharz-Klebstoff Anwendung finden, welcher sehr gute Adhäsionseigenschaften besitzt.

Die Erfindung wird nachfolgend anhand von in der Zeichnung dargestellten Ausführungsbeispielen näher beschrieben. In der Zeichnung zeigen:
- Fig. 1: eine perspektivische Seitenansicht der Grundplatte aus Kunststoff,
- Fig. 2a: einen Schnitt nach der Linie II-II in Fig. 1 vor Ein bringen des Klebestoffes auf die Bodenfläche und
- Fig. 2b: denselben Schnitt nach Einbringen des Klebemittels auf die Bodenfläche,
- Fig. 3: eine Unteransicht der Grundplatte gemäß Fig. 1,
- Fig. 4: eine andere Ausführungsmöglichkeit der erfindungsgemäßen Grundplatte.

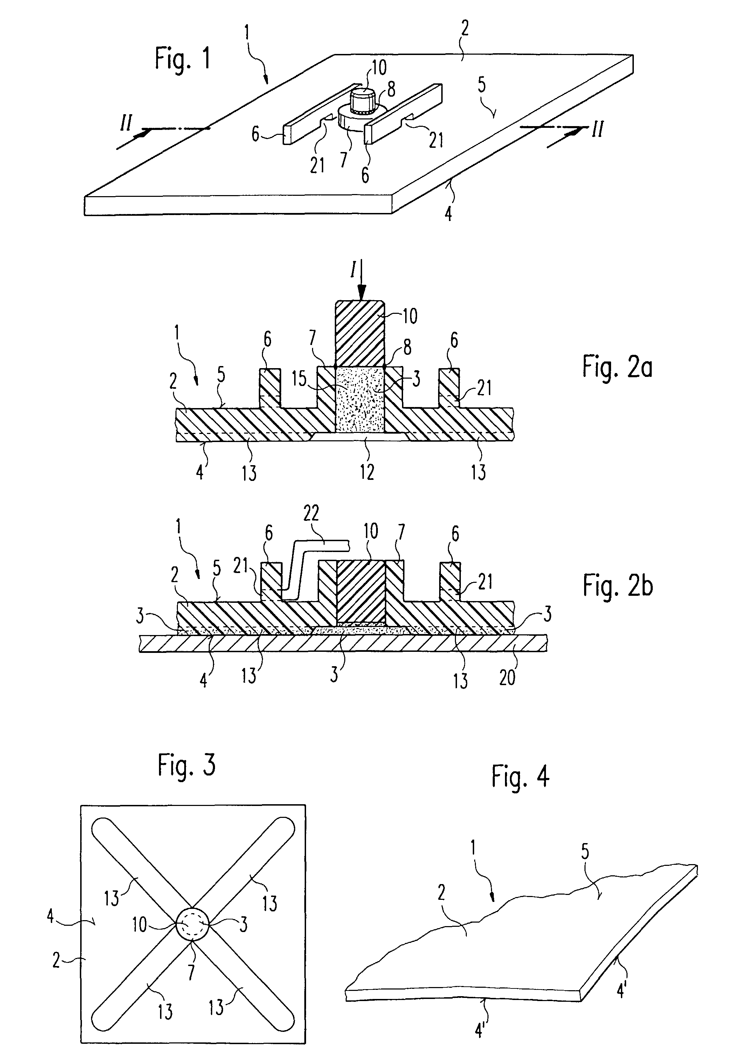

In Fig. 1 ist eine Grundplatte 1 dargestellt, welche aus Kunststoff besteht. Diese weist ein im wesentlichen plattenförmiges Befestigungsteil 2 sowie mindestens ein Halteelement 6 auf. Das plattenförmige Befestigungsteil 2 kann rund, rechteckig, quadratisch oder oval ausgebildet sein, bzw. jede beliebige polygonale Form besitzen.

Das plattenförmige Befestigungsteil 2 besitzt eine Bodenfläche 4 sowie eine dieser gegenüberliegende Fläche 5. Die Bodenfläche 4 ist über ein Klebemittel 3 an einem Träger 20 (Fig. 2b) befestigbar und zwar über mindestens einen Freiraum 12 in der Grundplatte 1. Auf der Fläche 5 ist das Halteelement 6 angeordnet. Das Halteelement 6 kann als Kupplungselement mit Aussparungen 21 ausgebildet sein, welches nach Fig. 2b über federnde Rastnasen mit einem weiteren Teil 22 verbindbar ist.

Es bestehen auch die nicht näher dargestellten Möglichkeiten, daß das Halteelement als Kabelhalter, als Rohrschelle oder als Einklippteil ausgebildet ist.

Wie aus Fig. 1 und 2a ersichtlich, weist das plattenförmige Befestigungsteil 2 einen Hohlkörper 7 auf, welcher einen Raum 15 besitzt. In diesem Raum 15 befindet sich Klebemittel 3. Der Hohlkörper 7 ist im oberen Bereich durch einen Spreizniet 10 verschlossen, wobei ein Filmscharnier 8 zwischen der Stirnseite des Spreizniets 10 und dem Innenumfang des Hohlkörpers 7 angeordnet ist.

Der Spreizniet 10 und der Hohlkörper 7 können jeweils zylindrisch ausgebildet sein.

Aus Fig. 2 und 3 ist erkennbar, daß die Bodenfläche 4 des plattenförmigen Befestigungsteil 2 mit mindestens einer Nut 13 versehen ist, welche ein Volumen aufweist, das auf die Aufnahme des Klebemittels 3 abgestellt ist. Es findet hier ein Freiraum 12 unterhalb des das Klebemittel 3 aufnehmenden Raums 15 des Hohlkörpers 7 Anwendung, wobei dieser Freiraum mit die Bodenfläche 4 durchsetzenden Nuten 13 verbunden ist.

Diese Nuten 13 können beispielsweise als Kreuznut ausgebildet sein, wobei sich im Zentrum der Kreuznut der Freiraum 12 unterhalb des Hohlkörpers 3 befinden.

Aus Fig. 3 geht darüber hinaus hervor, daß die Länge der sich diagonal über die Bodenfläche erstreckenden Nuten 13 der Kreuznut kürzer als die jeweilige Diagonale der Bodenfläche 4 sein kann. Damit ergeben sich endseitig abgeschlossene Nuten zur Aufnahme des Klebemittels.

Statt der Nuten besteht auch die Möglichkeit, die Bodenfläche mit anderen Profilierungen oder eben zu gestalten, wobei sichergestellt sein muß, daß die Menge des Klebemittels innerhalb der Bodenfläche 4 des plattenförmigen Befestigungsteils 2 verbleibt.

Die erfindungsgemäße Grundplatte 1 wird wie folgt an einem Träger 20 gemäß Fig. 2a und 2b befestigt: Zunächst wird die Grundplatte 1 auf den Träger 20 aufgelegt, woraufhin gemäß Fig. 2a in Pfeilrichtung I ein Druck auf den Spreizniet 10 ausgeübt wird. Hierdurch ergibt sich, daß das Filmscharnier 8 reißt und der Spreizniet in den Raum 15 des Hohlkörpers 7 eintritt. Durch das Zusammenwirken dieser mechanischen Bewegung zusammen mit Licht- und/oder Wärmeenergie wird das Klebematerial 3 über den Freiraum 12 in die Nuten 13 transportiert, wobei sich eine Verbindung mit der Oberseite des Trägers 20 ergibt. Überschüssiges Klebemittel kann über die Nuten 13 hinaustreten und außerdem zur weiteren Klebewirkung beitragen.

Nach Befestigen der Grundplatte 1 auf dem Träger 20 mit Hilfe des Klebemittels 3, welches beispielsweise ein Epoxydharz-Klebstoff ist, kann nunmehr beispielsweise ein Teil 22 über Rastnasen durch die Öffnungen 21 mit dem Halteelement 6 verbunden werden.

Bei der Ausführungsform nach Fig. 1 bis 3 ist die Bodenfläche 4 der Grundplatte 1 eben ausgebildet. Nach dem Ausführungsbeispiel gemäß Fig. 4 besteht auch die Möglichkeit, daß die Bodenfläche 4' konkav gewölbt und federnd ausgebildet ist, wobei sich eine Art Tellerfeder ergibt und hierdurch die Klebewirkung, d.h. die Haftung der Grundplatte 1 an dem Träger 20 verbessert wird. Außerdem werden hierdurch Bodenunebenheiten besser ausgeglichen.

Insgesamt ergibt sich eine einfach gestaltete Grundplatte aus Kunststoff, welche schnell und auf einfache Weise an einem Träger allein durch Einwirkung von Hitze bzw. Licht und Druck innerhalb eines kurzen Zeitraums zu montieren ist, und zwar in der Weise, daß eine funktionssichere Halterung an dem Träger gewährleistet wird. Das Klebemittel, d.h. beispielsweise ein Epoxydharz, kann sowohl kalt als auch warm aushärtbar sein, wobei zum Aushärten kein Preßdruck benötigt wird.

## Patentansprüche

1. Grundplatte aus Kunststoff, mit einem im wesentlichen plattenförmigen Befestigungsteil (2), welcher eine mit einem Klebemittel (3) zu versehene, an einem Träger (20) zu befestigende Bodenfläche (4, 4') aufweist,
wobei das Klebemittel (3) zunächst in einem der Bodenfläche (4, 4') gegenüberliegenden Raum (15) angeordnet und nach Einbringen eines Spreizniets (10) in den Raum (15) auf die Bodenfläche (4, 4') verbringbar ist,
**dadurch gekennzeichnet,**
dass der mit Klebemittel (3) gefüllte Raum (15) durch einen mit dem Befestigungsteil (2) verbundenen, über den Spreizniet (10) verschlossenen Haltekörper (7) definiert ist,
dass zwischen der Stirnseite des Spreizniets (10) und dem Innenumfang des Hohlkörpers (7) ein Filmscharnier (8) angeordnet ist,
dass das Befestigungsteil (2) mindestens ein auf einer der Bodenfläche (4, 4') gegenüberliegenden Fläche (5) angeordnetes Halteelement (6) aufweist und
dass das Klebemittel (3) unter Licht- und/oder Wärmeeinwirkung auf die Bodenfläche verbringbar ist.

2. Grundplatte nach Anspruch 1,
**dadurch gekennzeichnet,**
dass der Spreizniet (10) und der Hohlkörper (7) jeweils zylindrisch ausgebildet sind.

3. Grundplatte nach einem der vorhergehenden Ansprüche,
**dadurch gekennzeichnet,**
dass die Bodenfläche (4, 4') mit mindestens einer Nut (13) zur zumindest teilweisen Aufnahme des Klebemittels (3) nach Eintauchen des Spreizniets (10) in den Raum (15) versehen ist.

4. Grundplatte nach einem oder mehreren der vorhergehenden Ansprüche 1 bis 3,
**dadurch gekennzeichnet,**
dass ein Freiraum (12) unterhalb des das Klebemittel (3) aufnehmenden Raums (15) des Hohlkörpers (7) mit die Bodenfläche (4, 4') durchsetzenden Nuten (13) vorgesehen ist.

5. Grundplatte nach Anspruch 3 und 4,
**dadurch gekennzeichnet,**
dass mehrere Nuten (13) als Kreuznut ausgebildet sind, wobei im Zentrum der Kreuznut der Freiraum (12) unterhalb des Hohlkörpers (7) vorliegt.

6. Grundplatte nach Anspruch 4, mit rechteckiger Bodenfläche (4),
**dadurch gekennzeichnet,**
dass die Länge der sich diagonal über die Bodenfläche (4) erstreckenden Nuten (13) kleiner als die jeweilige Diagonale der Bodenfläche (4) ist.

7. Grundplatte nach einem oder mehreren der vorhergehenden Ansprüche 1 bis 5,
**dadurch gekennzeichnet,**
dass die Bodenfläche rund, oval oder polygonal ausgebildet ist.

8. Grundplatte nach einem oder mehreren der vorhergehenden Ansprüche 1 bis 5,
**dadurch gekennzeichnet,**
dass die Bodenfläche konkav gewölbt und federnd ausgebildet ist.

9. Grundplatte nach einem oder mehreren der vorhergehenden Ansprüche,
**dadurch gekennzeichnet,**
dass das Halteelement (6) als Kupplung, als Kabelhalter, als Rohrschelle oder als Einklippteil ausgebildet ist.

## Claims

1. Plastic base plate, having an essentially plate-like fastening part (2) which has a base surface (4, 4') which is to be provided with an adhesive (3) and is to be fastened on a carrier (20), it being the case that the adhesive (3) is first of all arranged in a space (15) located opposite the base surface (4, 4') and, once a split rivet (10) has been introduced into the space (15), can be displaced onto the base surface (4, 4'), characterized in that the space (15) filled with adhesive (3) is defined by a hollow body (7) which is connected to the fastening part (2) and is closed off via the split rivet (10), in that a film hinge (8) is arranged between the end side of the split rivet (10) and the inner circumference of the hollow body (7), in that the fastening part (2) has at least one retaining element (6) arranged on a surface (5) which is located opposite the base surface (4, 4'), and in that the adhesive (3) can be displaced onto the base surface under the action of light and/or heat.

2. Base plate according to Claim 1, characterized in that the split rivet (10) and the hollow body (7) are each of cylindrical design.

3. Base plate according to one of the preceding claims, characterized in that the base surface (4, 4') is provided with at least one groove (13) for at least partially receiving the adhesive (3) once the split rivet (10) has penetrated into the space (15).

4. Base plate according to one or more of the preceding Claims 1 to 3, characterized in that there is a free space (12) beneath the space (15), which receives the adhesive (3), of the hollow body (7) with grooves (13) passing through the base surface (4, 4').

5. Base plate according to Claims 3 and 4, characterized in that a plurality of grooves (13) are designed as crossed grooves, it being the case that the free space (12) is provided beneath the hollow body (7), in the centre of the crossed grooves.

6. Base plate according to Claim 4 with a rectangular base surface (4), characterized in that the length of the grooves (13) extending diagonally over the base surface (4) is smaller than the respective diagonal of the base surface (4).

7. Base plate according to one or more of the preceding Claims 1 to 5, characterized in that the base surface is of round, oval or polygonal design.

8. Base plate according to one or more of the preceding Claims 1 to 5, characterized in that the base surface is of concavely curved and resilient design.

9. Base plate according to one or more of the preceding claims, characterized in that the retaining element (6) is designed as a coupling, as a cable holder, as a pipe clamp or as a clip-in part.

## Revendications

1. Plaque de base en matière plastique, comprenant une partie de fixation (2) sensiblement sous forme de plaque, laquelle présente une surface inférieure (4, 4') munie d'un adhésif (3) et destinée à être fixée à un support (20), ledit adhésif étant tout d'abord agencé dans un espace (15) opposé à la surface inférieure (4, 4'), et applicable sur la surface inférieure (4, 4') après montage d'un rivet à écartement (10) dans l'espace (15),
caractérisée en ce que
l'espace (15) rempli d'adhésif (3) est défini par un corps de maintien (7) relié à la pièce de fixation (2) et refermé par le rivet à écartement (10),
entre la face frontale du rivet à écartement (10) et la périphérie intérieure du corps creux (7) est agencée une charnière à bande (8),
la partie de fixation (2) comporte au moins un élément de maintien (6) agencé sur la surface (5) opposée à la surface inférieure (4, 4'), et
l'adhésif (3) est applicable sur la surface inférieure par action de la lumière et/ou de la chaleur.

2. Plaque de base selon la revendication 1, caractérisée en ce que le rivet à écartement (10) et le corps creux (7) sont réalisés chacun sous forme cylindrique.

3. Plaque de base selon l'une des revendications précédentes, caractérisée en ce que la surface inférieure (4, 4') est pourvue d'au moins une rainure (13) afin de recevoir au moins partiellement l'adhésif (3) après engagement du rivet à écartement (10) dans l'espace (15).

4. Plaque de base selon l'une ou plusieurs des revendications 1 à 3, caractérisée en ce qu'il est prévu un espace libre (12) au-dessous de l'espace (15) du corps creux (7) qui reçoit l'adhésif (3), lequel est pourvu de rainures (13) qui traversent la surface inférieure (4, 4').

5. Plaque de base selon l'une ou l'autre des revendications 3 et 4, caractérisée en ce que plusieurs rainures (13) sont réalisées sous forme de rainures croisées, de sorte qu'au centre des rainures croisées se présente l'espace libre (12) au-dessous du corps creux (7).

6. Plaque de base selon la revendication 4, comportant une surface inférieure rectangulaire (4), caractérisée en ce que la longueur des rainures (13) qui s'étendent en diagonale sur la surface inférieure (4) est inférieure aux diagonales respectives de la surface inférieure (4).

7. Plaque de base selon l'une ou plusieurs des revendications 1 à 5, caractérisée en ce que la surface inférieure est réalisée sous forme ronde, ovale ou polygonale.

8. Plaque de base selon l'une ou plusieurs des revendications 1 à 5, caractérisée en ce que la surface inférieure est bombée de manière concave et réalisée à effet élastique.

9. Plaque de base selon l'une ou plusieurs des revendications précédentes, caractérisée en ce que l'élément de maintien (6) est réalisé sous la forme d'accouplement, sous forme de porte-câbles, sous forme de collier à tube, ou bien sous forme de pièce à enclipsage.
